(19) Europäisches Patentamt / European Patent Office / Office européen des brevets

(11) **EP 4 349 795 A2**

(12) # DEMANDE DE BREVET EUROPEEN

(43) Date de publication:
**10.04.2024 Bulletin 2024/15**

(21) Numéro de dépôt: **24157921.8**

(22) Date de dépôt: **29.10.2021**

(51) Classification Internationale des Brevets (IPC):
**C04B 14/10** $^{(2006.01)}$

(52) Classification Coopérative des Brevets (CPC):
(C-Sets disponibles)
**C04B 7/12; C04B 14/106** (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2020 FR 2011381**

(62) Numéro(s) de document de la (des) demande(s) initiale(s) en application de l'article 76 CBE:
**21810675.5 / 4 081 490**

(71) Demandeur: **Fives FCB**
**59650 Villeneuve d'Ascq (FR)**

(72) Inventeur: **CHARMET, Jean-Michel**
**59650 VILLENEUVE D'ASCQ (FR)**

(74) Mandataire: **Novagraaf International SA**
**Chemin de l'Echo 3**
**1213 Onex, Geneva (CH)**

Remarques:
Cette demande a été déposée le 15-02-2024 comme demande divisionnaire de la demande mentionnée sous le code INID 62.

(54) ## PROCÉDÉ DE PRODUCTION D'ARGILE CALCINÉE

(57) Procédé de production d'argile calcinée ayant des caractéristiques de couleur désirées dans lequel le procédé comprend :
- une étape de calcination d'une argile dans un calcinateur (6), ladite étape de calcination étant réalisée dans des conditions stoechiométriques ou oxydantes,
- une étape de réduction d'oxydes de fer III présents dans l'argile calcinée dans un système (7) de réduction distinct du calcinateur (6), cette étape de réduction étant réalisée par injection d'un gaz (15) de réduction, contenant des atomes d'hydrogène et mis en contact direct avec l'argile calcinée.

[Fig. 1]

Fig. 1

EP 4 349 795 A2

**(Cont. page suivante)**

(52) Classification Coopérative des Brevets (CPC):
(Cont.)

C-Sets
**C04B 14/106, C04B 20/04**

**EP 4 349 795 A2**

## Description

### Domaine technique

L'invention concerne un procédé de production d'argile calcinée. En particulier l'invention concerne un procédé de production d'argile calcinée destinée à être utilisée en tant que composant d'un ciment

### Arrière-plan technique

La fabrication de ciment utilise pour sa plus grande part une matière cuite, le clinker, qui est produite à partir de minéraux dont le constituant essentiel est le carbonate de calcium.

Le clinker est obtenu à partir d'une matière première composée d'un mélange de minéraux, parmi lesquels notamment l'argile, source d'aluminosilicates, et le calcaire, source de carbonate de calcium. Ces minéraux sont successivement mélangés, séchés, broyés, préchauffés, décarbonatés puis cuits et partiellement fondus dans un four rotatif jusqu'à une température d'environ 1500°C, puis le clinker ainsi formé est refroidi.

Le ciment est obtenu en broyant finement un mélange composé majoritairement de clinker.

Dans le procédé de fabrication du clinker, en plus des émissions de $CO_2$ provenant de la combustion des combustibles utilisés, le carbonate de calcium provenant majoritairement du calcaire est décarbonaté pour obtenir de la chaux apte à se recombiner avec les oxydes de silicium, d'aluminium et de fer dans le four rotatif afin de former le clinker. Cette étape de décarbonatation libère une importante quantité de dioxyde de carbone rejetée dans l'atmosphère.

Les législations nationales en matière d'émission de dioxyde de carbone se durcissent et obligent les acteurs à diminuer les quantités rejetées.

Outre le clinker, le ciment contient du gypse permettant de réguler le temps de prise des mortiers et bétons. Le ciment contient aussi de plus en plus souvent, et en proportion de plus en plus grande, des matériaux appelés communément « ajouts ciment » qui viennent en substitution du clinker afin de diminuer l'impact environnemental et le coût de la fabrication du ciment.

A titre d'exemple, les matériaux de substitution au clinker les plus utilisés actuellement sont le calcaire, les laitiers de haut-fourneau, les cendres volantes des centrales à charbon et la pouzzolane naturelle.

Hormis le calcaire qui a un simple rôle de « filler », anglicisme communément utilisé pour désigner des remplisseurs, ces matériaux de substitution au clinker ont une réactivité pouzzolanique leur permettant de participer à la réaction de prise hydraulique. Cette réactivité pouzzolanique contribue au maintien des propriétés mécaniques désirées des mortiers et bétons lorsque la part de clinker diminue.

Les argiles contenant de la kaolinite acquièrent lorsqu'elles sont calcinées, une réactivité pouzzolanique et deviennent alors d'excellents matériaux de substitution au clinker dans la fabrication de ciment. Elles sont aussi appelées « pouzzolanes artificielles ».

A la différence de la production du clinker, la production d'argile calcinée émet peu de $CO_2$.

En diminuant judicieusement la proportion de clinker tout en augmentant la proportion d'argile calcinée, il devient possible de produire un ciment avec des propriétés désirées.

En raison des oxydes de fer III, $Fe_2O_3$, qu'elle contient, l'argile a une teinte rougeâtre. En l'absence de traitement, l'ajout d'argile calcinée dans un ciment conduira à la production d'un ciment ayant une teinte rosée.

Les producteurs de ciments, et les utilisateurs finaux, souhaitent avoir un ciment de couleur grise.

Plusieurs procédés ont été mis en oeuvre pour modifier la teinte naturelle de l'argile calcinée et la rendre grisâtre.

Parmi ces techniques, on peut citer un procédé qui consiste à faire réagir chimiquement des molécules d'oxydes de fer III $Fe_2O_3$ pour obtenir des tétroxydes de trifer $Fe_3O_4$. Il s'agit d'une réaction d'oxydo-réduction. Après une première étape de calcination de l'argile, ce dernier est envoyé vers une zone de réduction où un agent réducteur liquide est injecté directement sur l'argile, notamment du gasoil. Le gasoil provoque les conditions qui permettent une réduction des oxydes de fer III afin d'obtenir des tétroxydes de trifer et des oxydes de fer FeO.

Bien que ce procédé permette d'obtenir une argile de couleur grise, il présente deux inconvénients majeurs :

- une importante quantité de gasoil pour la réduction des oxydes de fer III est injectée, impactant le coût de l'argile d'une part et l'environnement d'autre part,
- la réaction de réduction doit être réalisée à haute température impactant l'efficacité énergétique de ce procédé.

L'invention vise à remédier à cet inconvénient.

### Résumé de l'invention

A cet effet, il est proposé en premier lieu un procédé de production d'argile calcinée ayant des caractéristiques de couleur désirées dans lequel celui-ci comprend :

- une étape de calcination d'une argile dans un calcinateur, ladite étape de calcination étant réalisée dans des conditions stoechiométriques ou oxydantes,
- une étape de réduction d'oxydes de fer III présents dans l'argile calcinée dans un système de réduction distinct du calcinateur, cette étape de réduction étant réalisée par injection d'un gaz de réduction, contenant des atomes d'hydrogène et mis en contact direct avec l'argile calcinée.

Ce procédé permet avantageusement d'obtenir une argile de couleur grise en utilisant une faible quantité de réactif, significativement inférieure à la quantité utilisée avec des réactifs liquides. De plus, ce procédé permet d'augmenter l'efficacité énergétique car l'étape de réduction est effectuée à des températures inférieures par rapport à un procédé utilisant des réactifs liquides.

Diverses caractéristiques supplémentaires peuvent être prévues seules ou en combinaison :

- procédé dans lequel ;

- le gaz de réduction contient des réactifs de type hydrocarbures gazeux, ou

- le gaz de réduction contient des réactifs de type dihydrogène et monoxyde de carbone, ou

- le gaz de réduction contient un réactif de type dihydrogène, ou

- le gaz de réduction contient des réactifs de type hydrocarbures gazeux, dihydrogène et monoxyde de carbone ;

- l'étape de réduction comporte une opération de refroidissement de l'argile calcinée se déroulant de manière simultanée à la réduction des oxydes de fer III ;

- au cours de l'opération de refroidissement dans la chambre de réduction, la température de l'argile calcinée est abaissée en dessous d'une température seuil permettant d'éviter la réoxydation des oxydes de fer II et/ou des tétroxydes de trifer contenus dans l'argile calcinée, ladite température seuil étant sensiblement comprise entre 300°C et 600 °C ;

- la quantité de gaz de réduction injectée dans l'étape de réduction correspond à une quantité sensiblement comprise entre 0,01 et 2 moles de réactifs par mole d'oxyde de fer III présent dans l'argile calcinée ;

- le procédé comporte une étape intermédiaire de refroidissement entre l'étape de calcination et l'étape de réduction, cette étape intermédiaire de refroidissement permettant de refroidir l'argile calcinée jusqu'à une température de réduction comprise entre 300°C et 800°C ;

- l'étape de réduction est réalisée à une température de réduction comprise entre 300°C et 800°C ;

- le gaz de réduction contient des réactifs du type hydrocarbures gazeux $C_nH_m$ constitués de n atomes de carbone et de m atomes d'hydrogène ;

- la quantité de gaz de réduction injectée dans l'étape de réduction correspond à une quantité sensiblement comprise entre 0,01 et 1 mole de réactifs par mole d'oxyde de fer III présente dans l'argile calcinée ;

- le gaz de réduction est un réactif du type dihydrogène ;

- la quantité de gaz de réduction injectée dans l'étape de réduction correspond à une quantité sensiblement comprise entre 0,2 et 2 moles de réactif par mole d'oxydes de fer III présente dans l'argile calcinée ;

- le gaz de réduction contient un mélange de réactifs du type dihydrogène et monoxyde de carbone ;

- la quantité de gaz de réduction injectée dans l'étape de réduction correspond à une quantité sensiblement comprise entre 0,2 et 2 moles de réactifs par mole d'oxyde de fer III présente dans l'argile calcinée ;

- le gaz de réduction contient un mélange de réactifs du type hydrocarbures gazeux $C_nH_m$, dihydrogène et monoxyde

4

de carbone ;

- la quantité de gaz de réduction injectée dans l'étape de réduction correspond à une quantité sensiblement comprise entre 0,05 mole et 2 moles de réactifs par mole d'oxydes de fer III présente dans l'argile calcinée ;

- l'argile contient de la kaolinite ;

- la température de calcination dans l'étape de calcination est inférieure à 950°C ;

- l'argile calcinée est apte à être mélangée à du clinker destiné à la production de ciment.

Il est proposé en deuxième lieu une utilisation d'un procédé tel que précédemment décrit pour produire de l'argile calcinée destinée à la production de ciment.

**Brève description des dessins**

D'autres caractéristiques, détails et avantages apparaîtront à la lecture de la description détaillée ci-après, et à l'analyse des dessins annexés, sur lesquels :

**Fig. 1**

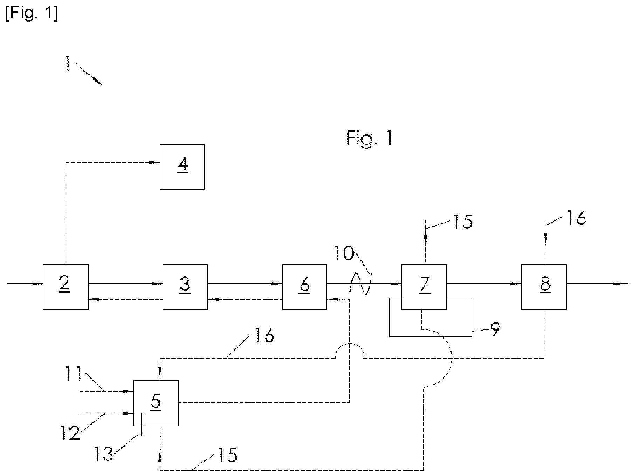

[Fig. 1] la figure 1 est une représentation schématique d'une installation selon l'invention.

**Fig. 2**

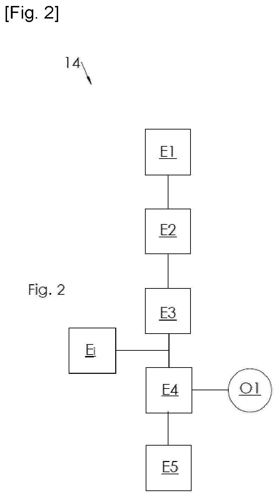

[Fig. 2] la figure 2 est une représentation schématique d'un procédé selon l'invention.

**Description détaillée de l'invention**

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.
Sur la figure 1 est représentée une unité 1 de production d'argile calcinée.
L'unité 1 comprend :

- un broyeur 2,
- un préchauffeur 3,
- un filtre 4,
- une chambre 5 de combustion,
- un calcinateur 6,
- un système 7 de réduction,
- un refroidisseur 8 final,
- un premier système 9 de refroidissement,
- un deuxième système 10 de refroidissement.

Il est tout d'abord décrit le cheminement des gaz et de l'argile dans l'unité 1 de production représentée sur la figure 1. De l'air 11 et un combustible 12 sont injectés dans la chambre 5 de combustion. Un brûleur 13 enflamme ce mélange dans la chambre 5 de combustion. Des gaz chauds sortent de la chambre 5 de combustion et sont envoyés vers le calcinateur 6, puis le préchauffeur 3 et enfin vers le broyeur 2. Ces gaz chauds sont évacués en passant par le filtre 4. En parallèle l'argile se déplace depuis le broyeur 2 vers le refroidisseur 8 final en passant respectivement par le préchauffeur 3, le calcinateur 6, le système 7 de réduction. L'air 16 utilisé dans le refroidisseur 8 final est acheminé au moins partiellement vers la chambre 5 de combustion.
Dans ce qui suit, un procédé 14 selon l'invention va être décrit.
En référence aux dessins, le procédé 14 selon l'invention comporte une première étape E1 dans laquelle de l'argile brute contenant des oxydes de fer III Fe2O3 est broyée et séchée dans le broyeur 2.
Sur les dessins, les traits pleins représentent le trajet de l'argile et les traits en pointillés indiquent le trajet des flux de gaz.
L'argile broyée et séchée est envoyée vers le préchauffeur 3, sauf la fraction la plus fine qui est emportée vers le filtre 4 par le flux de gaz chauds.
Le procédé comporte une deuxième étape E2 de préchauffage. Dans le préchauffeur 3 l'argile broyée et séchée est préchauffée par les gaz chauds provenant du calcinateur 6 jusqu'à une température comprise entre 300°C et 800°C.

L'agile préchauffée est ensuite dirigée vers le calcinateur 6. Ainsi le procédé comporte une troisième étape E3 de calcination. Afin d'activer le pouvoir pouzzolanique de l'argile calcinée et le rendre utilisable dans la confection de ciment, la calcination est réalisée à une température inférieure à 950°C. De préférence, la calcination est réalisée à une température comprise entre 700°C et 900°C. La calcination est réalisée dans des conditions stoechiométriques ou oxydantes. En d'autres termes le flux gazeux dans le calcinateur 6 est généré dans la chambre 5 de combustion par la combustion du mélange d'un comburant et d'un combustible dans des proportions stoechiométriques pour une combustion complète ou bien avec un excès de comburant pour une combustion oxydante. Dans le mode de réalisation représenté sur les dessins, la chambre 5 de combustion est distincte du calcinateur 6 avec principalement de l'air en guise de comburant. Ainsi que précédemment évoqué les gaz chauds produits dans la chambre 5 de combustion sont envoyés vers le calcinateur 6 afin de calciner l'argile.

L'argile calcinée est dirigée vers le système 7 de réduction. Ainsi le procédé comporte une quatrième étape E4 de réduction des oxydes de fer III contenus dans l'argile calcinée. La réduction est réalisée en injectant un gaz 15 de réduction contenant des atomes d'hydrogène, ce gaz étant mis en contact avec l'argile calcinée. Le gaz 15 de réduction est ensuite envoyé vers la chambre 5 de combustion.

Le gaz 15 de réduction contenant des atomes d'hydrogène permet de réduire les oxydes de fer III selon les formules suivantes pour obtenir principalement des tétroxydes de trifer et éventuellement des oxydes de fer II FeO :

$$[\text{Chem. 1}] \qquad 3Fe_2O_3 + H_2 \Leftrightarrow 2Fe_3O_4 + H_2O$$

$$[\text{Chem. 2}] \qquad Fe_3O_4 + H_2 \Leftrightarrow 3FeO + H_2O$$

et selon les formules suivantes, le monoxyde de carbone, lorsqu'il est présent, réagit avec les oxydes de fer III :

$$[\text{Chem. 3}] \qquad 3Fe_2O_3 + CO \Leftrightarrow 2Fe_3O_4 + CO_2$$

$$[\text{Chem. 4}] \qquad Fe_3O_4 + CO \Leftrightarrow 3FeO + CO_2$$

L'utilisation d'un gaz contenant des atomes d'hydrogène plutôt que du gasoil ou tout autre combustible liquide comme agent réducteur permet de réduire significativement la quantité d'agent réducteur dans l'étape E4 de réduction. L'argile calcinée de couleur grise est donc produite à un coût significativement inférieur. De plus l'impact sur l'environnement de la production d'argile calcinée de couleur grise est réduit.

L'argile calcinée de couleur grise est ensuite dirigée vers le refroidisseur 8 final refroidisseur, où l'argile calcinée est refroidie avec de l'air. Le procédé comprend ainsi une quatrième étape E5 de refroidissement final.

Avantageusement, le gaz 15 de réduction contient :

- des réactifs du type hydrocarbures gazeux de formule générique CnHm, ou
- un mélange de réactifs du type dihydrogène H2 et monoxyde de carbone CO, ou
- un réactif du type dihydrogène H2, ou
- un mélange de réactifs du type hydrocarbures gazeux de formule générique CnHm, dihydrogène, et monoxyde de carbone.

Il convient de noter que ces gaz, peuvent être mélangés à d'autre gaz, principalement de l'azote et/ou du dioxyde de carbone.

Avantageusement, la quatrième étape E4 de réduction comporte une opération O1 de refroidissement mettant en oeuvre le premier dispositif 9 de refroidissement. L'opération O1 de refroidissement se déroule de manière simultanée à la réduction des oxydes de fer III. Ceci permet de réduire la température de l'argile calcinée au cours de la quatrième étape E4 de réduction afin d'éviter la réoxydation des oxydes de fer II et/ou des tétroxydes de trifer après ladite quatrième étape E4 de réduction et à la sortie du système 7 de réduction.

Avantageusement, l'opération O1 de refroidissement dans la quatrième étape E4 de réduction est réalisée au moyen d'un fluide de refroidissement soit sans contact direct avec l'argile calcinée soit par contact direct avec l'argile calcinée sir le fluide de refroidissement contient moins de 10% de dioxygène en volume, par exemple des gaz de combustion prélevés à la sortie du préchauffeur 3 ou du calcinateur 6. Ceci permet d'éviter toute réoxydation significative des oxydes de fer II et/ou des tétroxydes de trifer pendant et après ladite quatrième étape E4 de réduction.

Avantageusement, au cours de l'opération O1 de refroidissement dans le système 7 de réduction, la température de l'argile calcinée est abaissée en dessous d'une température seuil comprise entre 300°C et 600°C, ceci permettant d'éviter la réoxydation des oxydes de fer II et/ou des tétroxydes de trifer.

Avantageusement la quantité de gaz 15 de réduction injecté dans la quatrième étape E4 de réduction correspond à une quantité sensiblement comprise entre 0,01 et 2 moles de réactifs par mole d'oxydes de fer III présente dans l'argile calcinée. En respectant ce dosage, on obtient une argile calcinée avec des teintes grisâtres désirées tout en minimisant l'apport de gaz, ce qui permet de réduire les coûts de production de l'argile et son impact sur l'environnement.

Avantageusement le procédé comprend une étape intermédiaire Ei de refroidissement entre la troisième étape E3 de calcination et la quatrième étape E4 de réduction, l'étape intermédiaire Ei de refroidissement étant mise en oeuvre au moyen du deuxième dispositif 10 de refroidissement. L'étape intermédiaire Ei de refroidissement permet de refroidir l'argile calcinée jusqu'à une température de réduction comprise entre 300°C et 800°C. Cette étape intermédiaire Ei de refroidissement est réalisée avant que l'argile calcinée entre dans le système 7 de réduction. Ce refroidissement intermédiaire peut être effectuée par tout moyen utile, notamment par de l'air. En refroidissant l'argile calcinée avant le système 7 de réduction, il est possible d'améliorer l'efficacité énergétique de l'unité 1 de production. L'énergie calorifique du refroidissement est utilisée pour d'autres applications, dans le même procédé ou pour une autre utilisation. Ceci est rendu possible grâce à l'utilisation d'un gaz contenant des atomes d'hydrogène en tant qu'agent réducteur, qui permet une réduction des oxydes de fer III à des températures inférieures que dans un procédé utilisant un agent réducteur liquide notamment.

Ainsi, il en découle que la quatrième étape E4 de réduction est réalisée à une température de réduction comprise entre 300°C et 800°C. Cette température de réduction permet d'améliorer l'efficacité énergétique de l'unité 1 de production.

Selon un premier mode de réalisation de l'invention, le gaz 15 de réduction contient des réactifs du type hydrocarbures gazeux de formule générique CnHm constitués de n atomes de carbone et de m atomes d'hydrogène. Ce gaz présente l'intérêt d'être facilement disponible et contient de nombreux atomes d'hydrogène, ce qui le rend particulièrement utile.

Le gaz 15 de réduction contient par exemple du méthane, du propane ou du butane. Dans ce premier mode de réalisation, ce gaz 15 de réduction subit dans le système 7 de réduction des réactions partielles de dissociation en présence du dioxygène O2, du dioxyde de carbone CO2 et de la vapeur d'eau H2O contenus dans les gaz de combustion. En effet, la matière calcinée transporte avec elle, entre les particules, une faible quantité de gaz de combustion. Les réactions de dissociations sont les suivantes :

[Chem. 5]

$$C_nH_m + \frac{n}{2}\,O_2 \Leftrightarrow \frac{m}{2}\,H_2 + n\,CO$$

[Chem. 6]

$$C_nH_m + n\,CO_2 \Leftrightarrow \frac{m}{2}\,H_2 + 2n\,CO$$

[Chem. 7]

$$C_nH_m + n\,H_2O \Leftrightarrow \left(\frac{m}{2} + n\right)H_2 + n\,CO$$

Dans le premier mode de réalisation, le gaz 15 de réduction est donc dans un premier temps partiellement transformé en un mélange de dihydrogène et de monoxyde de carbone.

La quantité des réactifs du type hydrocarbures gazeux de formule générique $C_nH_m$ injectée dans l'étape de réduction est sensiblement comprise entre 0,01 mole et 1 mole de réactifs par mole d'oxydes de fer III présente dans l'argile calcinée. La demanderesse a déterminé que cette quantité permet d'obtenir les teintes grisâtres souhaitées tout en réduisant au minimum cette quantité de sorte à réduire le coût de production de l'argile calcinée tout en réduisant l'impact sur l'environnement.

Selon un deuxième mode de réalisation de l'invention, le gaz 15 de réduction contient un réactif du type dihydrogène. Ce gaz permet d'éviter la production d'oxydes de carbone au cours de l'étape de réduction.

La quantité de réactif du type dihydrogène injectée dans l'étape de réduction est sensiblement comprise entre 0,2 mole et 2 moles de réactif par mole d'oxydes de fer III présente dans l'argile calcinée. La demanderesse a déterminé que cette quantité permet d'obtenir les teintes grisâtres souhaitées tout en réduisant au minimum cette quantité de sorte à réduire le coût de production de l'argile calcinée tout en réduisant l'impact sur l'environnement.

Selon un troisième mode de réalisation de l'invention, le gaz 15 de réduction contient un mélange de réactifs du type dihydrogène et monoxyde de carbone. Ce gaz présente l'intérêt d'être facile à synthétiser *in-situ* dans un réacteur dédié, communément dénommé « générateur d'endogaz ».

La quantité de ce mélange de réactifs du type dihydrogène et monoxyde de carbone injectée dans l'étape de réduction est sensiblement comprise entre 0,2 mole et 2 moles de réactifs par mole d'oxydes de fer III présente dans l'argile calcinée. La demanderesse a déterminé que cette quantité permet d'obtenir les teintes grisâtres souhaitées tout en réduisant au minimum cette quantité de sorte à réduire le coût de production de l'argile calcinée tout en réduisant l'impact sur l'environnement.

Selon un quatrième mode de réalisation de l'invention, le gaz 15 de réduction contient un mélange de réactifs du type hydrocarbures gazeux de forme générique $C_nH_m$, dihydrogène et monoxyde de carbone. Ce gaz présente l'intérêt d'être facile à synthétiser *in-situ* dans un réacteur dédié, communément dénommé « générateur d'exogaz ».

La quantité de ce mélange de réactifs du type hydrocarbures gazeux, dihydrogène et monoxyde de carbone, injectée dans l'étape de réduction est sensiblement comprise entre 0,05 mole et 2 moles de réactifs par mole d'oxydes de fer III présente dans l'argile calcinée. La demanderesse a déterminé que cette quantité permet d'obtenir les teintes grisâtres souhaitées tout en réduisant au minimum cette quantité de sorte à réduire le coût de production de l'argile calcinée tout en réduisant l'impact sur l'environnement.

Avantageusement, l'argile brute utilisée dans ce procédé 14 de production comprend de la kaolinite. Ce type d'argile permet d'être utilisé comme substitut partiel du clinker dans la production de ciment.

Ainsi l'argile calcinée obtenu au moyen du procédé précédemment décrit peut être mélangée à du clinker destiné à la production de ciment.

L'invention concerne également l'utilisation du procédé 14 précédemment décrit pour produire de l'argile calcinée destinée à la production de ciment. Une telle utilisation permet de produire un ciment de couleur grisâtre, en réduisant la part de clinker dans le ciment en la remplaçant par de l'argile calcinée. Le ciment ainsi obtenu présente une teinte grisâtre désirée et des propriétés mécaniques sensiblement identiques à celle d'un ciment sans argile calcinée.

**Revendications**

1. Procédé (14) de production d'argile calcinée ayant des caractéristiques de couleur désirées **caractérisé en ce que** le procédé (14) comprend :

   - une étape (E3) de calcination d'une argile dans un calcinateur (6), ladite étape (E3) de calcination étant réalisée dans des conditions stoechiométriques ou oxydantes,
   - une étape (E4) de réduction d'oxydes de fer III présents dans l'argile calcinée dans un système (7) de réduction distinct du calcinateur (6), cette étape (E4) de réduction étant réalisée par injection d'un gaz (15) de réduction, contenant des atomes d'hydrogène et mis en contact direct avec l'argile calcinée **caractérisé en ce que** :

     - soit le gaz (15) de réduction est du dihydrogène,
     - soit le gaz (15) de réduction contient un mélange de dihydrogène et de monoxyde de carbone,
     - soit le gaz (15) de réduction contient un mélange d'hydrocarbures gazeux $C_nH_m$, de dihydrogène et de monoxyde de carbone.

2. Procédé (14) selon la revendication 1 dans lequel, l'étape (E4) de réduction comporte une opération (O1) de refroidissement de l'argile calcinée se déroulant de manière simultanée à la réduction des oxydes de fer III.

3. Procédé (14) selon la revendication 2 dans lequel, au cours de l'opération (O1) de refroidissement dans la chambre (7) de réduction, la température de l'argile calcinée est abaissée en dessous d'une température seuil permettant d'éviter la réoxydation des oxydes de fer II et/ou des tétroxydes de trifer contenus dans l'argile calcinée, ladite température seuil étant comprise entre 300°C et 600 °C.

4. Procédé (14) selon l'une quelconque des revendications 1 à 3 dans lequel, la quantité de gaz (15) de réduction injectée dans l'étape (E4) de réduction correspond à une quantité comprise entre 0,01 et 2 moles de réactifs par mole d'oxyde de fer III présent dans l'argile calcinée.

5. Procédé (14) selon l'une quelconque des revendications précédentes dans lequel, celui-ci comporte une étape intermédiaire (Ei) de refroidissement entre l'étape (E3) de calcination et l'étape (E4) de réduction, cette étape (Ei) intermédiaire de refroidissement permettant de refroidir l'argile calcinée jusqu'à une température de réduction comprise entre 300°C et 800°C.

6. Procédé (14) selon l'une quelconque des revendications précédentes dans lequel, l'étape de réduction est réalisée à une température de réduction comprise entre 300°C et 800°C.

7. Procédé (14) selon la revendication 1 dans lequel, lorsque le gaz (15) de réduction est du dihydrogène, la quantité de gaz (15) de réduction injectée dans l'étape (E4) de réduction correspond à une quantité comprise entre 0,2 et 2 moles de réactif par mole d'oxydes de fer III présente dans l'argile calcinée.

8. Procédé (14) selon la revendication 1 dans lequel, lorsque le gaz (15) de réduction contient un mélange de dihydrogène et de monoxyde de carbone, la quantité de gaz (15) de réduction injectée dans l'étape (E4) de réduction correspond à une quantité comprise entre 0,2 et 2 moles de réactifs par mole d'oxyde de fer III présente dans l'argile calcinée.

9. Procédé (14) selon la revendication 1 dans lequel, lorsque le gaz (15) de réduction contient un mélange d'hydrocarbures gazeux $C_nH_m$, de dihydrogène et de monoxyde de carbone, la quantité de gaz (15) de réduction injectée dans l'étape (E4) de réduction correspond à une quantité comprise entre 0,05 mole et 2 moles de réactifs par mole d'oxydes de fer III présente dans l'argile calcinée.

10. Procédé (14) selon l'une quelconque des revendications précédentes dans lequel, l'argile contient de la kaolinite.

11. Procédé (14) selon l'une quelconque des revendications précédentes dans lequel, la température de calcination dans l'étape (E3) de calcination est inférieure à 950°C.

12. Utilisation d'un procédé (14) selon l'une quelconque des revendications précédentes pour produire de l'argile calcinée destinée à la production de ciment.

[Fig. 1]

Fig. 1

[Fig. 2]

14

Fig. 2